# FASCICULE DE BREVET EUROPEEN

(11) **EP 3 079 939 B1**
(45) Date de publication et mention de la délivrance du brevet: **03.01.2018**
(21) Numéro de dépôt: 14806017.1
(22) Date de dépôt: 06.11.2014
(51) Int. Cl.: B60L 11/18, G06F 1/32

(54) **PROCEDE ET SYSTEME D'ENDORMISSEMENT D'UN VEHICULE A TRACTION AU MOINS PARTIELLEMENT ELECTRIQUE**
VERFAHREN UND SYSTEM ZUR PLATZIERUNG EINES ZUMINDEST TEILWEISE ELEKTRISCHEN TRIEBFAHRZEUGS IM SCHLAFMODUS
METHOD AND SYSTEM FOR PLACING INTO A SLEEP STATE AN AT LEAST PARTIALLY ELECTRIC PROPELLED VEHICLE

(30) Priorité: 11.12.2013 FR 1362383
(43) Date de publication de la demande: 19.10.2016
(73) Titulaire: Renault S.A.S., 92100 Boulogne-Billancourt (FR)
(72) Inventeur: NAIR, Karima, 78000 Versailles (FR); HOUIVET, Jeanne, F-75015 Paris (FR)
(86) Numéro de dépôt international: PCT/FR2014/052833
(87) Numéro de publication internationale: WO 2015/086931

(56) Documents cités:
- US-A- 5 596 258
- US-A- 5 952 813
- US-A1- 2013 320 922

## Description

La présente invention se rapporte de manière générale au domaine de l'automobile, et concerne plus précisément un procédé d'endormissement des calculateurs d'un véhicule électrique ou hybride.

Les calculateurs d'un véhicule électrique ou hybride sont alimentés par une batterie de servitude du véhicule. Lorsque le véhicule est en fonctionnement, c'est-à-dire en mode roulage, cette batterie de servitude peut être rechargée via un convertisseur continu-continu alimenté par une batterie de traction du véhicule, ou encore par un alternateur du véhicule. Lorsque le véhicule est à l'arrêt, la recharge de la batterie de servitude peut s'effectuer en même temps que la recharge de la batterie de traction via le convertisseur continu-continu.

En dehors de ces cas, la batterie de servitude n'est pas rechargée et il est donc important, lorsque le véhicule est à l'arrêt et non en mode charge, que les consommateurs du véhicule, dont font partis les calculateurs du véhicule, soient éteints, seul le module BCM (d'après l'anglais « Board Control Module ») étant alimenté, afin de ne pas vider la batterie de servitude. Par exemple, un risque de décharge trop important de la batterie de servitude existe, du fait d'un disfonctionnement lors de l'arrêt d'un consommateur du véhicule. En effet si un consommateur du véhicule ne s'arrête pas correctement, le véhicule ne pourra pas « s'endormir ». Dans cette demande, on appelle « endormissement » l'extinction des différents calculateurs d'un véhicule qui s'effectue sur l'ordre d'un calculateur principal du véhicule, à l'exception du module BCM qui reste actif, prêt à recevoir un message de commande d'ouverture des portes du véhicule. Cette extinction permet d'économiser la batterie de servitude du véhicule lorsque celui-ci est à l'arrêt.

Dans un véhicule électrique, lorsque celui-ci est endormi, il existe un réveil technique périodique permettant de surveiller la tension de la batterie de servitude et de la recharger si besoin à partir d'une batterie de traction du véhicule. Cependant ce réveil technique n'est fonctionnel que lorsque les calculateurs du véhicule, à l'exception du module BCM, sont endormis.

Le brevet US6249106 propose, pour ne pas décharger la batterie de servitude d'un véhicule, de déconnecter automatiquement la batterie des consommateurs du véhicule dès que le niveau de charge de la batterie passe sous un seuil ou qu'une consommation anormale de la batterie du véhicule est détectée. Cependant ce procédé nécessite une analyse très fine du courant consommé et des différents cas de fonctionnement du véhicule. Il risque donc de couper indument l'alimentation d'un consommateur du véhicule, et donc de limiter les prestations utilisateur.

Un des buts de l'invention est de remédier à au moins une partie des inconvénients de la technique antérieure en fournissant un procédé d'endormissement d'un véhicule à traction au moins partiellement électrique, et un système d'endormissement d'un véhicule à traction au moins partiellement électrique, permettant l'endormissement du véhicule en fin de charge lorsque le calculateur de gestion d'un dispositif de charge du véhicule n'a pas pu terminer correctement sa session de charge.

A cette fin, l'invention propose un procédé d'endormissement d'un véhicule à traction au moins partiellement électrique équipé d'un dispositif de charge d'une batterie de traction, suite à une étape préalable d'activation dudit dispositif de charge, ledit procédé comportant une étape de réception d'une mesure d'une valeur de tension ou de courant effectuée sur ledit dispositif de charge, et étant caractérisé en ce qu'il comporte en outre :
- une étape de surveillance de messages transitant sur un bus de communication dudit véhicule,
- une étape de détermination d'une fin de charge lorsque ladite valeur est inférieure à un seuil prédéterminé pendant une durée prédéterminée,
- et une étape de désactivation d'un calculateur de gestion dudit dispositif de charge suite à ladite étape de détermination lorsqu'aucun message d'endormissement en provenance d'un calculateur principal du véhicule n'a été détecté pendant ladite étape de surveillance.

Cette dernière étape de désactivation du procédé selon l'invention déclenche un fonctionnement habituel du calculateur principal du véhicule, qui consiste à :
- détecter l'absence de messages en provenance de calculateurs du véhicule sur ledit bus de communication,
- et envoyer un message d'endormissement.

En effet, lorsqu'un véhicule à traction au moins partiellement électrique est en mode charge, il n'est pas endormi dans la mesure où la recharge de la batterie de traction du véhicule nécessite notamment le fonctionnement d'un calculateur de gestion d'un dispositif de charge de la batterie de traction, et d'un système de surveillance de la batterie de traction du véhicule. Lorsqu'une charge de la batterie de traction du véhicule est terminée, à moins d'un démarrage du véhicule par l'utilisateur, le véhicule doit s'endormir pour ne pas vider la batterie de servitude du véhicule. Or les inventrices ont constaté qu'un disfonctionnement pouvait empêcher ce passage à l'état endormi après une charge de la batterie de traction. Ce disfonctionnement peut être dû par exemple à :
- une mauvaise réception de messages entre le calculateur de gestion du dispositif de charge et le système de surveillance de la batterie de traction du véhicule,
- ou à un gel du calculateur de gestion du dispositif de charge,
- ou à un disfonctionnement du dispositif de charge.

Grâce à l'invention, ce cas de mauvais endormissement possible du véhicule est géré sans altérer la prestation utilisateur. En effet la déconnexion du calculateur de gestion du dispositif de charge à la fin d'une charge de la batterie de traction n'a pas de conséquence au redémarrage du véhicule. De plus l'invention est facilement implémentable, par exemple dans un module logiciel spécifique, sans altérer le fonctionnement habituel du calculateur principal du véhicule. En effet, en absence de messages en provenance de calculateurs spécifiques sur le bus de contrôle du véhicule, encore appelé CAN (d'après l'anglais « Controller Area Network ») le calculateur principal du véhicule provoque l'endormissement du véhicule. L'invention exploite cette caractéristique en forçant le calculateur de gestion du dispositif de charge à ne plus émettre sur le bus de contrôle du véhicule.

Selon une caractéristique avantageuse du procédé selon l'invention, l'étape de désactivation comprend l'ouverture d'un interrupteur situé entre une batterie de servitude dudit véhicule, et ledit calculateur de gestion dudit dispositif de charge. Cette déconnexion électrique du calculateur entraîne un redémarrage de celui-ci lors d'une prochaine activation, ce qui permet de débloquer un éventuel gel logiciel du calculateur à l'origine du mauvais endormissement du véhicule.

Selon une autre caractéristique avantageuse du procédé selon l'invention, ledit dispositif de charge étant un dispositif de charge sans contact comportant un redresseur dont les bornes de sortie sont reliées à ladite batterie de traction par l'intermédiaire de relais, et dont les bornes d'entrée sont reliées à un circuit résonnant comportant une bobine réceptrice de puissance, ladite mesure comporte la mesure de l'intensité du courant sur un bus de puissance reliant ladite batterie de traction audit redresseur, ou la mesure de la tension entre lesdites bornes de sortie dudit redresseur. De telles mesures sont effectuées par une carte de sécurité du dispositif de charge dans l'art antérieur, et sont donc utilisables pour implémenter simplement le procédé d'endormissement selon l'invention, de manière entièrement logicielle.

L'invention concerne aussi un système d'endormissement d'un véhicule à traction au moins partiellement électrique équipé d'un dispositif de charge d'une batterie de traction, ledit système comportant des moyens de détermination d'une valeur de tension ou de courant mesurée sur ledit dispositif de charge, ledit système étant caractérisé en ce qu'il comporte en outre :
- des moyens de surveillance de messages transitant sur un bus de communication dudit véhicule,
- des moyens de détermination aptes à déterminer une fin de charge de ladite batterie de traction lorsque, suite à une activation dudit dispositif de charge, ladite valeur de tension ou de courant fournie par lesdits moyens de détermination est inférieure à un seuil prédéterminé pendant une durée prédéterminée,
- et des moyens de désactivation d'un calculateur de gestion dudit dispositif de charge, aptes à être activés par lesdits moyens de détermination ayant déterminé une fin de charge lorsque lesdits moyens de surveillance n'ont détecté aucun message d'endormissement en provenance d'un calculateur principal du véhicule.

Lesdits moyens de désactivation comportent par exemple un interrupteur situé entre une batterie de servitude du véhicule et ledit calculateur de gestion.

Lorsque le dispositif de charge est un dispositif de charge sans contact comportant un redresseur dont les bornes de sortie sont reliées à ladite batterie de traction par l'intermédiaire de relais, et dont les bornes d'entrée sont reliées à un circuit résonnant comportant une bobine réceptrice de puissance, lesdits moyens de détermination comportent par exemple des moyens de mesure de l'intensité du courant circulant sur un bus de puissance reliant ladite batterie de traction audit redresseur, ou des moyens de mesure de la tension entre lesdites bornes de sortie dudit redresseur.

L'invention concerne encore un programme d'ordinateur comportant des instructions pour mettre en oeuvre le procédé d'endormissement d'un véhicule à traction au moins partiellement électrique selon l'invention, lorsqu'il est exécuté sur un ou plusieurs processeurs.

Le système d'endormissement selon l'invention et le programme d'ordinateur selon l'invention présentent des avantages analogues à ceux du procédé d'endormissement selon l'invention.

D'autres caractéristiques et avantages apparaîtront à la lecture d'un mode de réalisation préféré décrit en référence aux figures dans lesquelles :
- la figure 1 représente un dispositif de charge sans contact en relation avec des calculateurs dans un véhicule comportant un système d'endormissement selon l'invention,
- et la figure 2 représente notamment des étapes d'un procédé d'endormissement selon l'invention.

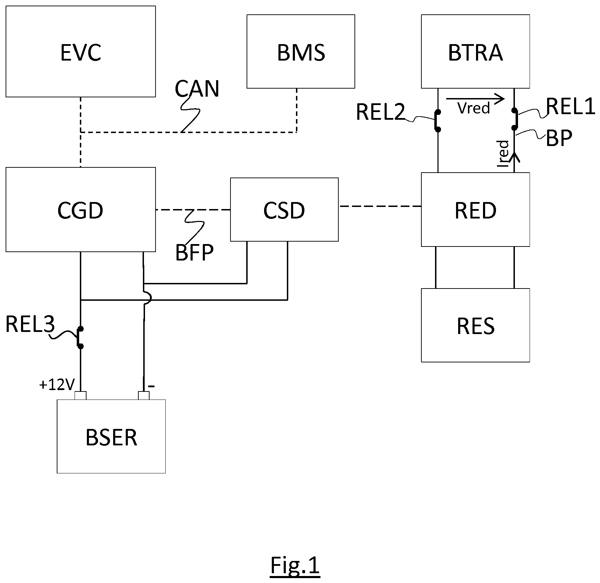

Selon un mode préféré de réalisation de l'invention représenté à la figure 1, un véhicule électrique comportant un système d'endormissement selon l'invention est équipé d'un dispositif de charge sans contact. Ce dispositif de charge sans contact comporte :
- Un redresseur RED dont des bornes de sortie sont reliées à une batterie de traction BTRA du véhicule par l'intermédiaire de relais REL1 et REL2 ; ce redresseur RED comporte par exemple un pont de diode avec une capacité en parallèle côté continu, c'est-à-dire côté batterie de traction.
- Et un circuit résonnant RES relié aux bornes d'entrée du redresseur RED ; Ce circuit résonnant RES comporte une bobine réceptrice de puissance ainsi qu'une capacité.

La gestion d'une charge de la batterie de traction BTRA par ce dispositif de charge sans contact est assurée par un calculateur CGD de gestion du dispositif de charge. Le calculateur CGD communique :
- d'une part avec une carte de sécurité CSD du dispositif de charge par l'intermédiaire d'un bus filaire propriétaire BFP,
- et d'autre part avec un calculateur principal EVC du véhicule et avec un système de surveillance BMS de la batterie de traction BTRA, par l'intermédiaire d'un bus de contrôle CAN du véhicule.

Afin de s'assurer du bon fonctionnement du dispositif de charge sans contact, la carte de sécurité CSD reçoit des mesures de courant et de tension effectuées sur le redresseur RED par un ou plusieurs capteurs de courant et un ou plusieurs capteurs de tension. Notamment, la carte de sécurité CSD reçoit :
- une mesure de l'intensité du courant Ired sur le bus de puissance BP reliant la borne positive de la batterie de traction BTRA et une première sortie du redresseur RED,
- et une mesure de la tension Vred aux bornes de sortie du redresseur RED (côté continu).

Les différentes cartes et/ou calculateurs EVC, BMS, CSD et CGD sont alimentées par une batterie de servitude BSER du véhicule, d'une tension nominale de 12V (Volts) environ. Le système d'endormissement selon l'invention comporte un interrupteur REL3 situé entre la batterie de servitude BSER et le calculateur de gestion CGD. Cet interrupteur REL3 permet de désactiver à la fois le calculateur de gestion CGD et la carte de sécurité CSD du dispositif de charge sans contact, en étant situé en amont de la connexion en parallèle de la carte de sécurité CSD et du calculateur de gestion CGD.

L'interrupteur REL3 est par exemple un relais de puissance, ou encore un transistor commandé.

Le système d'endormissement du véhicule selon l'invention comporte un module logiciel implémenté par exemple dans le calculateur EVC, ou de manière indépendante dans un autre calculateur. En variante, le système d'endormissement selon l'invention comporte plusieurs modules logiciels implémentés de manière distribuée entre plusieurs calculateurs du véhicule.

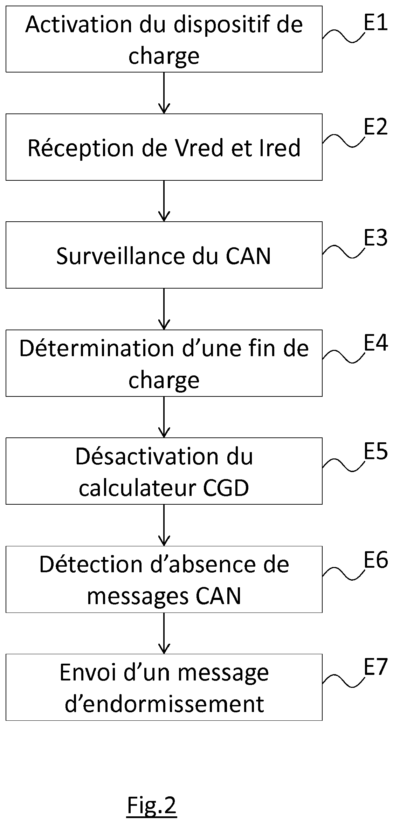

En référence à la figure 2, un procédé d'endormissement du véhicule selon l'invention est représenté sous la forme d'un algorithme comportant des étapes E2 à E5.

Le procédé est mis en oeuvre au moins en partie dans le module logiciel du système d'endormissement selon l'invention. En variante, si le système d'endormissement selon l'invention comporte plusieurs modules logiciels répartis dans plusieurs calculateurs du véhicule, alors le procédé d'endormissement selon l'invention est mis en oeuvre de manière distribuée entre ces modules logiciels.

Une étape préalable E1 à la mise en oeuvre du procédé d'endormissement selon l'invention, est l'activation du dispositif de charge sans contact, par exemple sur requête utilisateur. Cette étape déclenche la charge de la batterie de traction BTRA dont la tension à vide varie durant la charge d'une valeur de batterie déchargée d'environ 200V jusqu'à une valeur d'environ 400V en fin de charge.

L'étape E2 du procédé d'endormissement selon l'invention est la réception de la valeur de tension Vred, et/ou de la valeur de courant Ired mesurées sur le redresseur RED et envoyées à la carte de sécurité CSD. Ces valeurs sont par exemple fournies par la carte de sécurité CSD au module logiciel implémentant le procédé selon l'invention via le bus filaire BFP puis le bus de contrôle CAN. Cette étape E2 est mise en oeuvre de préférence dès le début de la charge de la batterie de traction BTRA, et pendant toute la charge de la batterie de traction BTRA.

L'étape E3 du procédé d'endormissement selon l'invention est la surveillance de messages transitant sur le bus de contrôle CAN du véhicule. Cette surveillance est effectuée par le module logiciel implémentant le procédé d'endormissement selon l'invention, ce module s'interfaçant avec un port matériel sur lequel est branché le bus CAN, ce port lui permettant de recevoir tous les messages échangés entre les différents calculateurs du véhicule utilisant le protocole CAN.

Cette étape E3 a lieu en parallèle de l'étape E2 de réception d'une mesure de tension Vred et/ou de courant Ired, le but de ces étapes E2 et E3 étant de vérifier que la fin de la charge de la batterie BTRA se déroule correctement.

L'étape E4 du procédé d'endormissement selon l'invention est la détermination d'une fin de charge lorsque la ou les valeurs reçues à l'étape E2 sont inférieures à des seuils prédéterminés correspondants pendant une durée prédéterminée. Pour cela, le module logiciel détecte par exemple que la valeur de tension Vred reçue à l'étape E2 est inférieure à 10V pendant au moins 15 minutes, et/ou que la valeur de courant Ired reçue à l'étape E2 est inférieure à 5A (Ampères) depuis au moins 15 minutes. La durée prédéterminée de 15 minutes est significative d'une fin de charge et permet d'exclure une interruption temporaire de charge due par exemple à une mesure de sécurité. En variante cette durée prédéterminée est fixée à une valeur inférieure à 15 minutes mais au moins supérieure à 10 minutes environ.

Il est à noter que l'étape E3 de surveillance des messages transitant sur le bus de contrôle CAN se poursuit pendant et après cette étape E4, afin de vérifier que suite à la fin de charge de la batterie de traction BTRA, le calculateur de gestion CGD du dispositif de charge va bien se mettre en mode « ReadyToSleep » c'est-à-dire prêt à se faire endormir par le calculateur principal EVC du véhicule.

L'étape suivante E5 du procédé d'endormissement selon l'invention est la désactivation du calculateur de gestion CGD lorsqu'aucun message d'endormissement en provenance du calculateur principal EVC n'a été détecté pendant l'étape E3. En variante dans cette étape on désactive le calculateur de gestion CGD lorsqu'aucun message « Ready To Sleep » en provenance du calculateur CGD à destination du calculateur EVC n' est détecté sur le bus CAN. Cette étape E5 a donc lieu uniquement lors d'un disfonctionnement en fin de charge de la traction de batterie BTRA.

En effet une fin de charge sans disfonctionnement se présente comme suit :
- Le système de surveillance BMS de la batterie de traction BTRA envoie au calculateur de gestion CGD une requête de fin de charge « EndOfChargeRequest » sur le bus de contrôle CAN; suite à cet envoi le système de surveillance BMS se met en mode «ReadyToSleep » c'est-à-dire prêt à se faire endormir par le calculateur principal EVC.
- A la réception de cette requête « EndOfChargeRequest », le calculateur de gestion CGD ne fournit plus de consigne de courant d'alimentation de la batterie BTRA, met à jour un indicateur de fin de charge, enregistre les données de la charge qui vient de se terminer dans un journal de charge, puis se met en mode «ReadyToSleep » c'est-à-dire prêt à se faire endormir par le calculateur principal EVC.
- Le calculateur principal EVC détecte ensuite que le système de surveillance BMS et le calculateur de gestion CGD sont inactifs et prêts à être endormis, comme les autres calculateurs du véhicule puisqu'on suppose ici que le véhicule est à l'arrêt. Le calculateur principal EVC signale alors au module BCM (d'après l'anglais « Board Control Module ») du véhicule que tous les calculateurs du véhicule sont inactifs. Le module BCM envoie alors un message d'endormissement au calculateur principal EVC, qui le propage à tous les autres calculateurs du véhicule, qui s'éteignent, le calculateur EVC s'éteignant en dernier. Seul le module BCM reste actif, prêt à recevoir une commande d'ouverture de portes par exemple.

Lors d'un disfonctionnement en fin de charge, par exemple :
- si le calculateur de gestion du dispositif de charge CGD n'a pas reçu la requête de fin de charge de la part du système de surveillance BMS de la batterie BTRA,
- ou si le calculateur EVC n'a pas reçu de message « Ready To Sleep » du calculateur de gestion CGD,
alors le calculateur de gestion du dispositif de charge CGD ne peut être considéré comme prêt à être endormi par le calculateur principal EVC du véhicule, qui n'envoie alors pas de message d'endormissement. C'est donc cette absence de message envoyé par le calculateur principal du véhicule, ou en variante l'absence de message « Ready To Sleep » de la part du calculateur de gestion CGD, qui sont détectées lors de cette étape E5 afin de permettre l'endormissement du véhicule par la désactivation du calculateur de gestion CGD.

Pour cela, dans cette étape E5, on commande l'ouverture de l'interrupteur REL3, coupant l'alimentation du calculateur de gestion CGD et de la carte de sécurité CSD. En variante seule l'alimentation du calculateur de gestion CGD est coupée.

L'étape suivante E6 est la détection d'absence de messages sur le bus de contrôle CAN. Cette étape est effectuée par le calculateur principal EVC du véhicule. En effet, le calculateur de gestion CGD ayant été désactivé à l'étape E5, le calculateur principal EVC du véhicule va déduire de l'inactivité du calculateur de gestion CGD que celui-ci est en mode « ReadyToSleep ».

Enfin lors d'une dernière étape E7, le calculateur principal EVC propage un message d'endormissement permettant au véhicule de s'endormir et d'économiser la batterie de servitude BSER.

Il est à noter que bien que dans ce mode de réalisation de l'invention, le véhicule dans lequel est implémenté le système d'endormissement selon l'invention, est un véhicule électrique comportant un dispositif de charge sans contact, l'invention est également réalisable dans un véhicule hybride rechargeable ou électrique pur comportant seulement un dispositif de charge filaire par exemple. La détection de la fin de charge utilise une ou plusieurs mesures en sortie d'un étage redresseur qui est commun aux dispositifs de charge filaire et sans contact. Cependant il est possible d'utiliser d'autres mesures pour détecter la fin de charge d'une batterie de traction, telles qu'une mesure de courant ou de tension en entrée du dispositif de charge, c'est-à-dire au niveau de la prise de charge du véhicule par exemple.

## Revendications

1. Procédé d'endormissement d'un véhicule à traction au moins partiellement électrique équipé d'un dispositif de charge d'une batterie de traction (BTRA), suite à une étape préalable d'activation (E1) dudit dispositif de charge, ledit procédé comportant une étape de réception (E2) d'une mesure d'une valeur (Ired, Vred) de tension ou de courant effectuée sur ledit dispositif de charge, et étant **caractérisé en ce qu'**il comporte en outre :
- une étape de surveillance (E3) de messages transitant sur un bus de communication (CAN) dudit véhicule,
- une étape de détermination (E4) d'une fin de charge lorsque ladite valeur (Ired, Vred) est inférieure à un seuil prédéterminé pendant une durée prédéterminée,
- et une étape de désactivation (E5) d'un calculateur de gestion (CGD) dudit dispositif de charge suite à ladite étape de détermination (E4) lorsqu'aucun message d'endormissement en provenance d'un calculateur principal (EVC) du véhicule n'a été détecté pendant ladite étape de surveillance (E3).

2. Procédé d'endormissement selon la revendication 1, **caractérisé en ce que** l'étape de désactivation (E5) comprend l'ouverture d'un interrupteur (REL3) situé entre une batterie de servitude (BSER) dudit véhicule, et ledit calculateur de gestion (CGD) dudit dispositif de charge.

3. Procédé d'endormissement selon la revendication 1 ou 2, **caractérisé en ce que** ledit dispositif de charge étant un dispositif de charge sans contact comportant un redresseur (RED) dont les bornes de sortie sont reliées à ladite batterie de traction (BTRA) par l'intermédiaire de relais (REL1, REL2), et dont les bornes d'entrée sont reliées à un circuit résonnant (RES) comportant une bobine réceptrice de puissance, ladite mesure comporte la mesure de l'intensité du courant (Ired) sur un bus de puissance (BP) reliant ladite batterie de traction (BTRA) audit redresseur (RED), ou la mesure de la tension (Vred) entre lesdites bornes de sortie dudit redresseur (RED).

4. Système d'endormissement d'un véhicule à traction au moins partiellement électrique équipé d'un dispositif de charge d'une batterie de traction (BTRA), ledit système comportant des moyens de détermination d'une valeur de tension (Vred) ou de courant mesurée (Ired) sur ledit dispositif de charge, ledit système étant **caractérisé en ce qu'**il comporte en outre :
- des moyens de surveillance de messages transitant sur un bus de communication (CAN) dudit véhicule,
- des moyens de détermination aptes à déterminer une fin de charge de ladite batterie de traction (BTRA) lorsque, suite à une activation dudit dispositif de charge, ladite valeur de tension (Vred) ou de courant (Ired) fournie par lesdits moyens de détermination est inférieure à un seuil prédéterminé pendant une durée prédéterminée,
- des moyens de désactivation (REL3) d'un calculateur de gestion (CGD) dudit dispositif de charge, aptes à être activés par lesdits moyens de détermination ayant déterminé une fin de charge lorsque lesdits moyens de surveillance n'ont détecté aucun message d'endormissement en provenance d'un calculateur principal (EVC) du véhicule.

5. Système d'endormissement d'un véhicule selon la revendication 4, **caractérisé en ce que** lesdits moyens de désactivation comportent un interrupteur (REL3) situé entre une batterie de servitude (BSER) du véhicule et ledit calculateur de gestion (CGD).

6. Système d'endormissement d'un véhicule selon la revendication 4 ou 5, **caractérisé en ce que** ledit dispositif de charge étant un dispositif de charge sans contact comportant un redresseur (RED) dont les bornes de sortie sont reliées à ladite batterie de traction (BTRA) par l'intermédiaire de relais (REL1, REL2), et dont les bornes d'entrée sont reliées à un circuit résonnant (RES) comportant une bobine réceptrice de puissance, lesdits moyens de détermination comportent des moyens de mesure de l'intensité du courant (Ired) circulant sur un bus de puissance (BP) reliant ladite batterie de traction (BTRA) audit redresseur (RED), ou des moyens de mesure de la tension (Vred) entre lesdites bornes de sortie dudit redresseur (RED).

7. Programme d'ordinateur comportant des instructions pour mettre en oeuvre le procédé d'endormissement d'un véhicule à traction au moins partiellement électrique selon l'une quelconque des revendications 1 à 3, lorsqu'il est exécuté sur un ou plusieurs processeurs.

## Patentansprüche

1. Verfahren zum Versetzen eines mit einer Ladevorrichtung einer Traktionsbatterie (BTRA) ausgestatteten, mindestens teilweise elektrischen Triebfahrzeugs in den Schlafmodus nach einem vorhergehenden Aktivierungsschritt (E1) der Ladevorrichtung, wobei das Verfahren einen Empfangsschritt (E2) einer an der Ladevorrichtung ausgeführten Messung eines Spannungs- oder Stromwerts (Ired, Vred) enthält, und **dadurch gekennzeichnet, dass** es außerdem aufweist:
- einen Überwachungsschritt (E3) von Nachrichten, die über einen Kommunikationsbus (CAN) des Fahrzeugs übertragen werden,
- einen Bestimmungsschritt (E4) eines Ladeendes, wenn der Wert (Ired, Vred) während einer vorbestimmten Dauer niedriger als eine vorbestimmte Schwelle ist,
- und einen Deaktivierungsschritt (E5) eines Verwaltungsrechners (CGD) der Ladevorrichtung nach dem Bestimmungsschritt (E4), wenn während des Überwachungsschritts (E3) keine von einem Hauptrechner (EVC) des Fahrzeugs kommende Schlafmodus-Nachricht erfasst wurde.

2. Verfahren zum Versetzen in den Schlafmodus nach Anspruch 1, **dadurch gekennzeichnet, dass** der Deaktivierungsschritt (E5) das Öffnen eines Schalters (REL3) enthält, der sich zwischen einer Versorgungsbatterie (BSER) des Fahrzeugs und dem Verwaltungsrechner (CGD) der Ladevorrichtung befindet.

3. Verfahren zum Versetzen in den Schlafmodus nach Anspruch 1 oder 2, **dadurch gekennzeichnet, dass**, da die Ladevorrichtung eine kontaktlose Ladevorrichtung ist, die einen Gleichrichter (RED) aufweist, dessen Ausgangsklemmen über Relais (REL1, REL2) mit der Traktionsbatterie (BTRA) verbunden sind und dessen Eingangsklemmen mit einem eine Leistungsempfangsspule aufweisenden Resonanzkreis (RES) verbunden sind, die Messung das Messen der Stärke des Stroms (Ired) auf einem die Traktionsbatterie (BTRA) mit dem Gleichrichter (RED) verbindenden Leistungsbus (BP) oder das Messen der Spannung (Vred) zwischen den Ausgangsklemmen des Gleichrichters (RED) enthält.

4. System zum Versetzen eines mit einer Ladevorrichtung einer Traktionsbatterie (BTRA) ausgestatteten, mindestens teilweise elektrischen Triebfahrzeugs in den Schlafmodus, wobei das System Bestimmungseinrichtungen eines in der Ladevorrichtung gemessenen Spannungs- (Vred) oder Stromwerts (Ired) aufweist, wobei das System **dadurch gekennzeichnet ist, dass** es außerdem aufweist:
- Überwachungseinrichtungen von Nachrichten, die über einen Kommunikationsbus (CAN) des Fahrzeugs übertragen werden,
- Bestimmungseinrichtungen, die ein Ladeende der Traktionsbatterie (BTRA) bestimmen können, wenn nach einer Aktivierung der Ladevorrichtung der von den Bestimmungseinrichtungen gelieferte Spannungs- (Vred) oder Stromwert (Ired) während einer vorbestimmten Dauer niedriger als eine vorbestimmte Schwelle ist,
- Deaktivierungseinrichtungen (REL3) eines Verwaltungsrechners (CGD) der Ladevorrichtung, die von den Bestimmungseinrichtungen aktiviert werden können, die ein Ladeende bestimmt haben, wenn die Überwachungseinrichtungen keine von einem Hauptrechner (EVC) des Fahrzeugs kommende Schlafmodus-Nachricht erfasst haben.

5. System zum Versetzen eines Fahrzeugs in den Schlafmodus nach Anspruch 4, **dadurch gekennzeichnet, dass** die Deaktivierungseinrichtungen einen Schalter (REL3) aufweisen, der sich zwischen einer Versorgungsbatterie (BSER) des Fahrzeugs und dem Verwaltungsrechner (CGD) befindet.

6. System zum Versetzen eines Fahrzeugs in den Schlafmodus nach Anspruch 4 oder 5, **dadurch gekennzeichnet, dass**, da die Ladevorrichtung eine kontaktlose Ladevorrichtung ist, die einen Gleichrichter (RED) aufweist, dessen Ausgangsklemmen über Relais (REL1, REL2) mit der Traktionsbatterie (BTRA) verbunden sind und dessen Eingangsklemmen mit einem eine Leistungsempfangsspule aufweisenden Resonanzkreis (RES) verbunden sind, die Bestimmungseinrichtungen Einrichtungen zum Messen des auf einem die Traktionsbatterie (BTRA) mit dem Gleichrichter (RED) verbindenden Leistungsbus (BP) zirkulierenden Stroms (Ired) oder Einrichtungen zum Messen der Spannung (Vred) zwischen den Ausgangsklemmen des Gleichrichters (RED) aufweisen.

7. Computerprogramm, das Anweisungen zur Durchführung des Verfahrens zum Versetzen eines mindestens teilweise elektrischen Triebfahrzeugs in den Schlafmodus nach einem der Ansprüche 1 bis 3 aufweist, wenn es auf einem oder mehreren Prozessoren ausgeführt wird.

## Claims

1. Method for putting to sleep a vehicle with at least partially electric traction equipped with a charging device for a traction battery (BTRA), following a preliminary step of activation (E1) of said charging device, said method comprising a step of reception (E2) of a measurement of a voltage or current value (Ired, Vred) performed on said charging device, and being **characterized in that** it also comprises:
- a step of monitoring (E3) messages circulating on a communication bus (CAN) of said vehicle,
- a step of determining (E4) of an end of charging when said value (Ired, Vred) is below a predetermined threshold for a predetermined time,
- and a step of deactivation (E5) of a management computer (CGD) of said charging device following said determination step (E4) when no message for putting to sleep from a main computer (EVC) of the vehicle has been detected during said monitoring step (E3).

2. Method for putting to sleep according to Claim 1, **characterized in that** the deactivation step (E5) comprises the opening of a switch (REL3) situated between a utility battery (BSER) of said vehicle, and said management computer (CGD) of said charging device.

3. Method for putting to sleep according to Claim 1 or 2, **characterized in that**, said charging device being a contactless charging device comprising a rectifier (RED) whose output terminals are linked to said traction battery (BTRA) via relays (REL1, REL2), and whose input terminals are linked to a resonant circuit (RES) comprising a power-receiving coil, said measurement comprises the measurement of the intensity of the current (Ired) on a power bus (BP) linking said traction battery (BTRA) to said rectifier (RED), or the measurement of the voltage (Vred) between said output terminals of said rectifier (RED).

4. System for putting to sleep a vehicle with at least partially electric traction equipped with a charging device for a traction battery (BTRA), said system comprising means for determining a voltage value (Vred) or current value (Ired) measured on said charging device, said system being **characterized in that** it also comprises:
- means for monitoring messages circulating on a communication bus (CAN) of said vehicle,
- determination means capable of determining an end of charging of said traction battery (BTRA) when, following an activation of said charging device, said voltage (Vred) or current (Ired) value supplied by said determination means is below a predetermined threshold for a predetermined time,
- means (REL3) for deactivating a management computer (CGD) of said charging device, capable of being activated by said determination means having determined an end of charging when said monitoring means have detected no message for putting to sleep from a main computer (EVC) of the vehicle.

5. System for putting to sleep a vehicle according to Claim 4, **characterized in that** said deactivation means comprise a switch (REL3) situated between a utility battery (BSER) of the vehicle and said management computer (CGD).

6. System for putting to sleep a vehicle according to Claim 4 or 5, **characterized in that**, said charging device being a contactless charging device comprising a rectifier (RED) whose output terminals are linked to said traction battery (BTRA) via relays (REL1, REL2), and whose input terminals are linked to a resonant circuit (RES) comprising a power-receiving coil, said determination means comprise means for measuring the intensity of the current (Ired) circulating on a power bus (BP) linking said traction battery (BTRA) to said rectifier (RED), or means for measuring the voltage (Vred) between said output terminals of said rectifier (RED).

7. Computer program comprising instructions for implementing the method for putting to sleep a vehicle with at least partially electric traction according to any one of Claims 1 to 3, when it is executed on one or more processors.
